# EUROPÄISCHE PATENTSCHRIFT

(11) **EP 0 862 047 B1**
(45) Veröffentlichungstag und Bekanntmachung des Hinweises auf die Patenterteilung: **29.01.2003**
(21) Anmeldenummer: 97120424.3
(22) Anmeldetag: 21.11.1997
(51) Int. Cl.: G01C 9/26

(54) **Vorrichtung zum Nivellieren einer Messeinrichtung**
Device for levelling a measuring device
Dispositif pour niveler un appareil de mesure

(30) Priorität: 28.02.1997 DE 29703672 U
(43) Veröffentlichungstag der Anmeldung: 02.09.1998
(73) Patentinhaber: Mayer & Wonisch GmbH & Co. KG, 59757 Arnsberg (DE)
(72) Erfinder: Wonisch, Martin, 59757 Arnsberg (DE)
(74) Vertreter: Söltenfuss, Dirk Christian, Dipl.-Phys.

(56) Entgegenhaltungen:
- GB-A- 2 276 451
- US-A- 2 207 410
- US-A- 4 150 492

## Beschreibung

Die Erfindung betrifft eine Vorrichtung zum Nivellieren von Meßeinrichtungen, insbesondere von Wasserwaagen nach dem Oberbegriff von Anspruch 1.

Unter dem Nivellieren von Meßeinrichtungen wird im nachfolgenden im wesentlichen verstanden, daß Meßgeräte und Meßinstrumente, insbesondere Wasserwaagen, in Bezug auf eine Bezugsebene ausgerichtet werden. Dieses Ausrichten kann bedeuten, daß beispielsweise eine Wasserwaage parallel zu einer Bezugsebene oder aber unter einem Winkel zu einer Bezugsebene ausgerichtet wird, um Flächen und Ebenen vermessen zu können oder aber Flächen und Ebenen, die in Bezug zur Bezugsebene des Meßgerätes stehen, vermessen zu können. Solche Vermessungsarbeiten finden in vielfältigen Tätigkeiten Anwendung, beispielsweise beim Fließenlegen auf Böden und an Wänden und anderen Arbeiten im Bauhandwerk.

Wasserwaagen dienen im allgemeinen dem Prüfen der waagerechten oder senkrechten Ebene einer Fläche oder Linie, insbesondere einer Fläche oder Kante eines Objekts, eines Raumes oder dergleichen und werden vor allem im Bauhandwerk eingesetzt. Prinzipiell bestehen Wasserwaagen aus einer geschlossenen Glasröhre mit Skala, einer sogenannten Libelle, die bis auf eine kleine Gasblase mit Flüssigkeit, wie Alkohol oder Äther, gefüllt ist.

Die Libelle ist üblicherweise für den Benutzer frei sichtbar in ein stabförmiges Gehäuse eingesetzt. Bei exakt horizontaler bzw. senkrechter oder lotrechter Lage der Libelle steht die Gasblase genau in der Mitte der Libelle.

Durch diese auf der Wirkung der Schwerkraft bzw. Erdanziehung basierenden Prüfmethode wird die Orientierung einer Fläche oder Kante eines Objekts bezüglich der (Tangente zur) Erdkugeloberfläche bzw. der Radialrichtung zum Erdmittelpunkt bestimmt. Die Messung ist unabhängig von anderen Bezugsebenen oder -punkten, wie beispielsweise Wänden oder Fußböden, die schräg oder uneben sein können.

Will der Benutzer ein Objekt mittels einer Wasserwaage nicht nur vermessen, sondern auch ausrichten, d.h. nivellieren, so muß zunächst die Wasserwaage möglichst exakt ausgerichtet werden. Bei schrägen oder unebenen Bezugsebenen ist diese Ausrichtung mit herkömmlichen Wasserwaagen häufig nur sehr schwierig oder gar nicht möglich, da die Wasserwaage vom Benutzer zumeist in der Hand gehalten werden muß.

Zur Erleichterung des Nivellierens einer Wasserwaage ist zum Beispiel aus der US-A-2,207,410 eine Vorrichtung mit den Merkmalen des Oberbegriffs von Patentanspruch 1 bekannt. Diese Vorrichtung ist ein Justierelement mit einem Gehäuse, das auf ein erstes Stirnende einer Wasserwaage aufschiebbar und mittels einer Befestigungsvorrichtung daran feststellbar ist. Weiter ist das Justierelement mit einer Justiervorrichtung versehen, um die Höhe des Stirnendes der Wasserwaage relativ zu einer Bezugsebene einzustellen.

Weiter ist in der GB-A-2,276,451 eine Wasserwaage beschrieben, die in der Nähe eines ihrer Stirnenden eine Vorrichtung zur Höhenverstellung der Wasserwaage relativ zu einer Bezugsebene aufweist. Diese Vorrichtung ist in der Form einer Gewindespindel ausgebildet, deren freies Ende auf der Bezugsebene aufsteht, und die außerdem eine Skalierung aufweist, mit deren Hilfe die Neigung der Bezugsebene bestimmt werden kann.

Ausgehend von dem vorbeschriebenen Stand der Technik ist es eine Aufgabe der vorliegenden Erfindung, eine Vorrichtung bereitzustellen, die auf besonders einfache, leicht handhabbare und variable Weise die Nivellierung von Meßeinrichtungen, insbesondere von Wasserwaagen und dergleichen, selbst an schrägen und/oder unebenen Bezugsebenen ermöglicht.

Diese Aufgabe wird durch eine Vorrichtung zum Nivellieren von Meßeinrichtungen mit den Merkmalen von Patentanspruch 1 gelöst.

Die erfindungsgemäße Vorrichtung weist neben dem Justierelement noch ein zweites Element auf, die jeweils lösbar an den beiden Stirnenden einer Meßeinrichtung anbringbar sind. Das Justierelement dient der Nivellierung der Meßeinrichtung in Bezug auf eine Bezugsebene, während das Standelement dem sicheren Stand der Vorrichtung und Meßeinrichtung auch auf unebenen Bezugsebenen dient. Die lösbare und damit auswechselbare Befestigung beider Elemente ermöglicht einen sehr variablen Einsatz der erfindungsgemäßen Vorrichtung für unterschiedliche Meßeinrichtungen. Die erfindungsgemäße Vorrichtung ist dabei prinzipiell unabhängig von der Ausführung der jeweiligen Meßeinrichtung, solange es sich um ein im wesentlichen stabförmiges Gehäuse von beliebigem Querschnitt handelt.

Weitere vorteilhafte Ausgestaltungen und Weiterbildungen der Erfindung sind Gegenstand der abhängigen Ansprüche.

Die vorliegende Erfindung wird im folgenden anhand eines bevorzugten Ausführungsbeispiels und unter Bezugnahme auf die beiliegende Zeichnung näher erläutert. Darin zeigen:
- Figur 1: eine herkömmliche Wasserwaage mit einer erfindungsgemäßen Vorrichtung in Seitenansicht;
- Figur 2: eine herkömmliche Wasserwaage mit einer erfindungsgemäßen Vorrichtung in Draufsicht;
- Figur 3: das Standelement der erfindungsgemäßen Vorrichtung in Draufsicht;
- Figur 4: das Standelement gemäß Schnitt A-A von Figur 3;
- Figur 5: das Standelement in Ansicht B von Figur 3;
- Figur 6: das Standelement gemäß Schnitt A-A von Figur 3 mit einer alternativen Befestigungsvorrichtung; und
- Figur 7: das Justierelement der erfindungsgemäßen Vorrichtung im Schnitt.

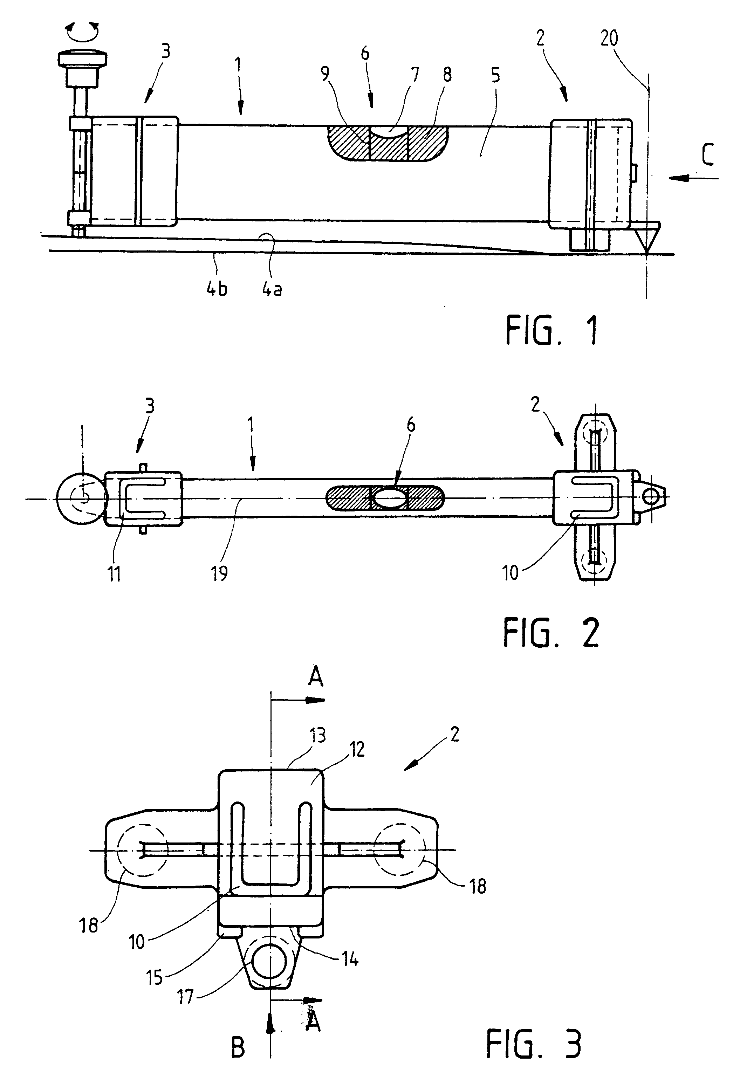

Die Figuren 1 und 2 zeigen eine herkömmliche Wasserwaage 1 als eine beispielhafte Meßeinrichtung, die in einem bevorzugten Ausführungsbeispiel mit der erfindungsgemäßen Vorrichtung 2, 3 ausgerüstet ist. Die Wasserwaage 1 besteht aus einem stabförmigen Gehäuse 5 von im wesentlichen rechteckigen Querschnitt, in das eine sogenannte Libelle 6 eingesetzt ist. Die Libelle 6 ist bis auf eine Gasblase 7 mit einer Flüssigkeit 8 gefüllt, und außerdem für den Benutzer gut sichtbar angebracht.

In Figur 1 steht die Wasserwaage 1 mit der Vorrichtung 2, 3 auf einer Bezugsebene 4a, wie beispielsweise einem Fußboden, die schräg zur Horizontalen 4b verläuft bzw. uneben ist. Obwohl die Wasserwaage 1 auf einer schrägen Bezugsebene 4a steht, befindet sich die Gasblase 7 genau in der Mitte der Skala 9 der Libelle 6, d.h. die Wasserwaage 1 ist horizontal ausgerichtet und damit nivelliert genau parallel zur Horizontalen 4b. Mit Hilfe der erfindungsgemäßen Vorrichtung 2, 3 kann die Unebenheit bzw. Schräge einer Bezugsebene 4a ausgeglichen werden.

Als Bezugsebene kann anstelle des gezeigten Fußbodens natürlich auch eine Wand oder eine beliebige Fläche eines Gegenstandes gelten. Ebenso kann die Bezugsebene beispielsweise eine Straße oder eine Landschaftsfläche sein.

Die erfindungsgemäße Vorrichtung besteht im wesentlichen aus einem Standelement 2 und einem Justierelement 3, wobei die beiden Elemente 2, 3 an den oder in der Nähe bzw. im stirnseitigen Endbereich der entgegengesetzt liegenden Enden des stabförmigen Gehäuses 5 der Wasserwaage 1 angebracht sind. Das Gehäuse 5 der Wasserwaage 1 ist in die weiter unten noch näher beschriebenen Elemente 2, 3 eingeschoben und mittels Befestigungsvorrichtungen 10 und 11 in den Elementen 2 bzw. 3 befestigt, um nicht verrutschen zu können. Zu diesem Zweck besitzen die Elemente Klemmeinrichtungen, die auf die Meßeinrichtung wirken.

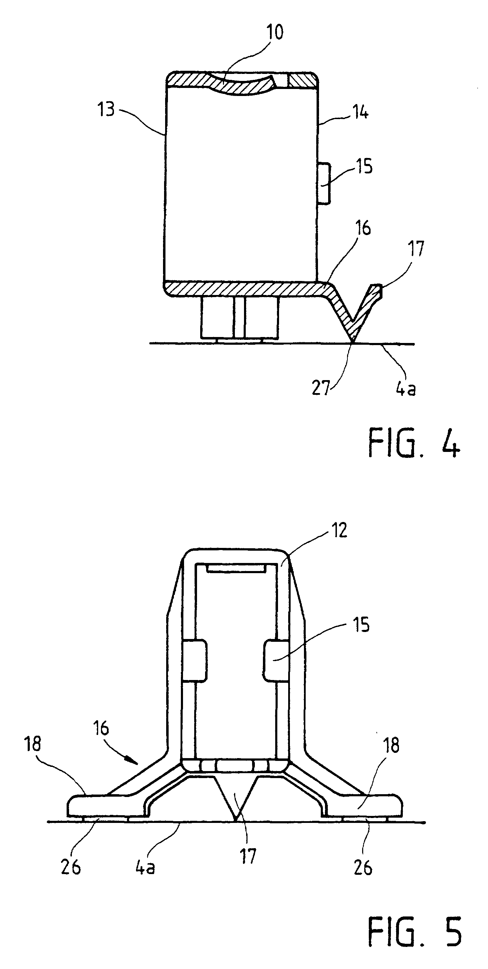

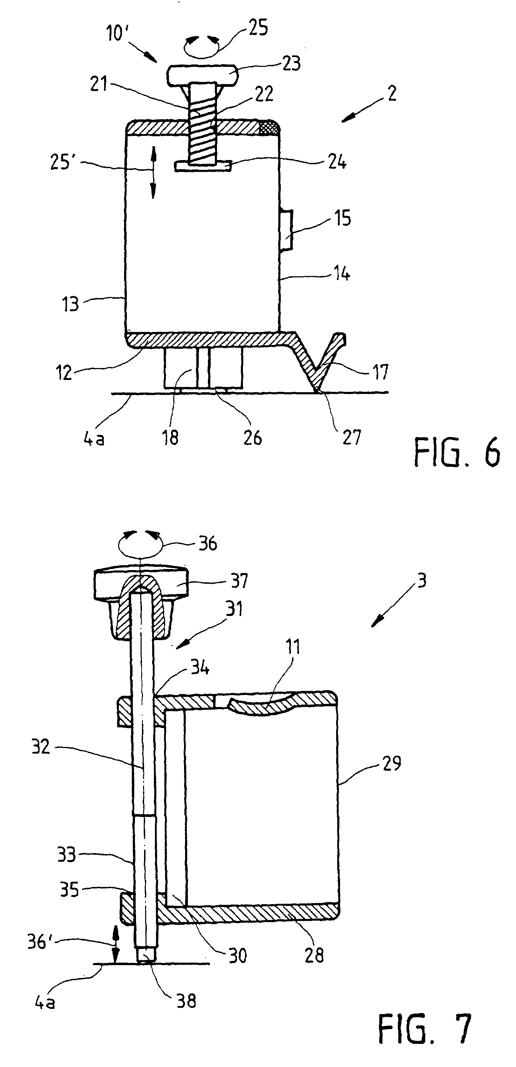

Anhand der Figuren 3 bis 6 wird nun das Standelement 2 dieses Ausführungsbeispiels genauer beschrieben. Dabei zeigt Figur 3 das Standelement 2 in Draufsicht, Figur 4 gemäß Schnitt A-A von Figur 3, Figur 5 in Ansicht B von Figur 3 und Figur 6 gemäß Schnitt A-A von Figur 3 mit einer alternativen Befestigungsvorrichtung 10'.

Das Standelement 2 besteht im wesentlichen aus einem Gehäuse 12, das die Form eines kurzen Hohlprofils hat. Der Innenquerschnitt dieses Hohlprofils 12 ist dem Querschnitt der aufzunehmenden Meßeinrichtung im wesentlichen angepaßt und vorzugsweise rechteckig entsprechend der Form der Gehäuse 5 der meisten üblichen Wasserwaagen 1. Größe und Querschnitt des Gehäuses 12 sind jeweils der verwendeten Wasserwaage 1 anzupassen, wobei die erfindungsgemäße Vorrichtung 2, 3 so ausgelegt ist, daß Wasserwaagen 1 verschiedener Größen, die innerhalb eines bestimmten Bereichs liegen, mit ein und derselben Vorrichtung 2, 3 ausgerüstet werden können. Dies wird durch die weiter unten noch zu beschreibende Ausführungsform der Befestigungsvorrichtungen 10, 11 ermöglicht.

Das Hohlprofil 12 hat zwei einander gegenüberliegende offene Stirnenden 13 und 14. An dem einen offenen Stirnende 14 ist mindestens ein Anschlag 15 angebracht, so daß die Wasserwaage 1 an dem einen offenen Stirnende 13 in das Gehäuse 12 eingeschoben werden kann, bis sie am Anschlag 15 des anderen Stirnendes 14 ansteht. Anstatt eines Ansachlages 15 am offenen Stirnende 14 kann das Gehäuse 12 ebenso eine geschlossene Stirnseite 14 aufweisen, gegen die die Wasserwaage 1 ansteht.

Alternativ kann auch ganz auf einen Anschlag 15 am Gehäuse 12 verzichtet werden, so daß die Wasserwaage 1 beliebig weit in das Gehäuse 12 eingeschoben bzw. durch das Gehäuse 12 hindurchgeschoben werden kann. Diese Alternative gewährt dem Benutzer mehr Freiheit bezüglich der Position des Standelements 2. Es ist jedoch festzuhalten, daß die Ausrichtung der Wasserwaage 1 um so leichter und genauer möglich ist, je näher das Standelement 2 am Stirnende des Gehäuses 5 der Wasserwaage 1 angebracht ist.

Das Gehäuse 12 ist auf eine Standvorrichtung oder Aufnahme 16 aufgesetzt, um einen sicheren Stand des Standelements 2 und damit der Wasserwaage 1 zu gewährleisten. Besonders vorteilhaft für die Standsicherheit der Wasserwaage 1 ist eine Standvorrichtung 16 in Form einer Dreipunktauflage. Bei der Dreipunktauflage 16 befinden sich zwei Standfüße 18 seitlich vom Gehäuse 12 im gleichen axialen Abstand von der Längsachse 19 der Wasserwaage 1 und ein Standfuß 17 hinter dem Stirnende des Gehäuses 12 in der Verlängerung der Längsachse 19, wobei alle drei Standfüße 17, 18 die gleiche Standhöhe haben. Die beiden seitlichen Standfüße 18 besitzen jeweils eine Auflagefläche 26, der Standfuß 17 dagegen im wesentlichen nur einen Auflagepunkt 27.

Durch die oben beschriebene spezielle Ausführung der Standvorrichtung 16 kann die Wasserwaage 1 nicht um ihre Längsachse 19 verdreht oder verkippt werden. Die Standvorrichtung 16 gewährt aber einen Freiheitsgrad bezüglich einer Drehung um eine Achse 20 (siehe Figur 1), welche im rechten Winkel zur Drehachse 19 in der Bezugsebene 4a bzw. der Horizontalen 4b durch den Auflagepunkt 27 des Stützfußes 17 verläuft. Mittels einer Drehung der Wasserwaage 1 um diese Achse 20 kann die Wasserwaage 1 in die horizontale Lage ausgerichtet werden.

An der oben liegenden Wand des Gehäuses 12 befindet sich eine Befestigungsvorrichtung 10. Die Befestigungsvorrichtung 10 dient dem festen Sitz der Wasserwaage 1 in dem Standelement 2. In dem Ausführungsbeispiel der Figuren 3 bis 5 ist die Befestigungsvorrichtung 10 als U-förmige Federzunge ausgebildet, wobei die Basis des "U" frei ist und die beiden Schenkel des "U" nach unten in das Innere des Gehäuses 12 gebogen sind. Die Federzunge ist dadurch einstückig mit dem Gehäuse ausgebildet. Die in das Gehäuse 12 eingeschobene Wasserwaage 1 drückt die beiden Schenkel der Federzunge 10 entgegen ihrer Federkraft nach oben und wird durch die Federkraft festgeklemmt.

Der Vorteil der Befestigung der Wasserwaage 1 mittels Federzunge 10 liegt darin, daß die Wasserwaage 1 ohne zusätzliche oder schwierige und umständliche Handgriffe des Benutzers in dem Standelement 2 einen festen Sitz erhält bzw. aus dem Justierelement 2 gelöst werden kann. Ein fester Sitz ist allerdings nur für solche Wasserwaagen 1 gewährleistet, deren Maße des Gehäuses 5 nur etwas kleiner sind als der Innenquerschnitt des Hohlprofils 12.

Soll ein und dasselbe Standelement 2 für möglichst viele Wasserwaagen 1 unterschiedlicher Gehäusegröße einsetzbar sein, so sind Federzungen 10 mit einem möglichst großen Federweg zu wählen oder aber es ist beispielsweise eine Schraubklemmung 10' als Befestigungsvorrichtung vorzusehen, wie dies in Figur 6 gezeigt ist.

Weitere Möglichkeiten der Klemmung der Meßeinrichtung in die Nivelliervorrichtung bestehen in einer Magnethalterung, in einer Nut- und Federklemmung oder einfach darin, daß eine Kugel, ein Zapfen, eine Spitze oder sonstiger Vorsprung in eine geeignete, angepaßte Nut, Sicke oder Ausnehmung einrastet.

Figur 6 entspricht der Ansicht von Figur 4 und zeigt das Standelement 2 gemäß Schnitt A-A von Figur 3, allerdings mit der alternativen Befestigungsvorrichtung 10'einer Schraubklemmung. Die Schraubklemmung 10' erfolgt über eine Gewindespindel 21, die durch ein entsprechendes Gewindeloch 22 in der oben liegenden Wand des Gehäuses 12 geführt ist. Die Gewindespindel 21 ist mittels eines Handrades 23 in das Gehäuse 12 hinein bzw. aus dem Gehäuse 12 heraus drehbar (Pfeile 25, 25'). An der Spitze der Gewindespindel 21 im Inneren des Gehäuses 12 ist eine plattenförmige Gummikappe 24 angebracht. Die Gummikappe 24 bewirkt eine größere Auflagefläche der Gewindespindel 21 und vermeidet Beschädigungen des Gehäuses 5 der Wasserwaage 1. Je nach Länge der Gewindespindel 21 sind unterschiedliche Größendifferenzen zwischen Wasserwaagengehäuse 5 und Gehäuseinnenquerschnitt überbrückbar.

Die Befestigungsvorrichtung 10, 10' kann sowohl an der oben liegenden Wand des Gehäuses 12, wie in den Figuren 3 bis 6 gezeigt, und/oder an den Seitenwänden des Gehäuses 12 zum seitlichen Festklemmen der Wasserwaage 1 angebracht sein.

Das Justierelement 3 wird im folgenden anhand von Figur 7 näher erläutert. Die in Figur 7 gezeigte Ansicht des Justierelements 3 entspricht dem in den Figuren 4 und 6 dargestellten Schnitt A-A des Standelements 2. Die Draufsicht des Justierelements 3 ist in einem kleineren Maßstab der Figur 2 zu entnehmen.

Das Justierelement 3 besteht wie das Standelement 2 im wesentlichen aus einem Gehäuse 28 in der Form eines kurzen Hohlprofils, wobei die wesentlichen Abmessungen, insbesondere des Innenquerschnitts, mit denen des Gehäuses 12 des Standelements 2 übereinstimmen. Das Gehäuse 28 hat ein offenes Stirnende 29, in das die Wasserwaage 1 eingeschoben wird, und einen Anschlag 30 an dem dem offenen Stirnende 29 gegenüberliegenden Stirnende des Gehäuses 28, bis zu dem die Wasserwaage 1 in das Gehäuse 28 einschiebbar ist. Weiter enthält das Gehäuse 28 ebenfalls eine Befestigungsvorrichtung 11, welche in dem in Figur 7 gezeigten Ausführungsbeispiel als Federzunge ausgebildet ist. Die Federzunge 11 ist analog der Federzunge 10 des oben beschriebenen Standelements 2 ausgebildet, und es sind hier ebenfalls die geschilderten Alternativen, wie beispielsweise eine Schraubklemmung möglich. Die Befestigungsvorrichtung 11 kann an der oben liegenden Wand und/oder den Seitenwänden des Gehäuses 28 angebracht sein.

An der dem offenen Stirnende 29 gegenüberliegenden Seite befindet sich am Gehäuse 28 in der Verlängerung der Längsachse 19 der Wasserwaage 1 hinter dem Anschlag 30 eine Justiervorrichtung 31. Mit Hilfe der Justiervorrichtung 31 ist der Abstand des Justierelements 3 von der Bezugsebene 4a einstellbar. Dadurch wird auch der Abstand dieses Stirnendes der Wasserwaage 1 von der Bezugsebene 4a eingestellt, wobei die Wasserwaage 1 um die in Figur 1 dargestellte Drehachse 20 gedreht und somit parallel zur Horizontalen 4b ausgerichtet werden kann.

Figur 7 zeigt die Justiervorrichtung 31 als bevorzugtes Ausführungsbeispiel in Form einer Gewindespindel 32. Die Gewindespindel 32 ist im oberen Teilbereich außen mit einer glatten Oberfläche und im unteren Teilbereich mit einem Außengewinde 33 versehen. Die Gewindespindel 32 ist durch zwei Durchführungen 34, 35 am Gehäuse 28 geführt, wobei die untere Durchführung 35 mit einem der Gewindespindel 32 entsprechenden Innengewinde ausgebildet ist. Durch Drehen der Gewindespindel 32 (Pfeil 36) wird sie in dem Gewinde 35 hinauf- und hinunterverschoben, also axial bewegt (Pfeil 36'), so daß durch Drehen der Gewindespindel 32 der Abstand des Justierelements 3 von der Bezugsebene 4a reguliert wird.

Zum leichteren Drehen der Gewindespindel 32 ist diese für den Benutzer an ihrem oberen, oberhalb des Gehäuses 28 liegenden Ende mit einem Handrad 37 ausgestattet. Am unteren Ende der Gewindespindel 32 ist eine Kunststoffkappe 38 angebracht, um die Oberfläche der Bezugsebene 4a nicht zu beschädigen und die Gewindespindel 32 zu schonen.

Die Standfestigkeit des gesamten Aufbaus 1, 2 und 3 wird durch die Standvorrichtung 16 des Standelements 2 und die Positionierung der Justiervorrichtung 31 auf der Linie der Längsachse 19 der Wasserwaage 1 erreicht. Eine Standvorrichtung am Justierelement 3 ist deshalb nicht nötig, und wegen des erforderlichen variablen Abstands zur Bezugsebene 4a außerdem nur schwierig realisierbar.

Außer den Handrädern 23, 37, den Kunststoffkappen 24, 38 und den Auflageflächen 26 bzw. -punkten 27 der Standvorrichtung 16, die jeweils vorzugsweise aus Kunststoff sind, sind sämtliche Elemente der erfindungsgemäßen Vorrichtung 2, 3 vorzugsweise aus Metall, wie beispielsweise Stahl oder Aluminium, oder ebenfalls aus Kunststoff.

## Patentansprüche

1. Vorrichtung zum Nivellieren von Meßeinrichtungen, insbesondere von Wasserwaagen oder dergleichen, zu einer Bezugsebene (4a), mit einem Justierelement (3), das ein Gehäuse (28) aufweist, das auf ein erstes Stirnende der Meßeinrichtung (1) aufschiebbar und mittels einer Befestigungsvorrichtung (11) lösbar an der Meßeinrichtung (1) befestigbar ist, und mit einer Justiervorrichtung (31) zur Höheneinstellung des einen Stirnendes der Meßeinrichtung von der Bezugsebene (4a) versehen ist,
**dadurch gekennzeichnet,**
**dass** die Vorrichtung weiter mit einem Standelement (2) versehen ist, das ein Gehäuse (12), das auf ein dem ersten Stirnende abgewandtes zweites Stirnende der Meßeinrichtung (1) aufschiebbar und mittels einer Befestigungsvorrichtung (10, 10') lösbar an der Meßeinrichtung (1) befestigbar ist, und eine Standvorrichtung (16) zum sicheren Stand des Standelements (2) auf der Bezugsebene (4a) aufweist; und
**dass** sowohl das Gehäuse (28) des Justierelements (3) als auch das Gehäuse (12) des Standelements (2) derart ausgebildet sind, dass ihr Innenquerschnitt dem Außenquerschnitt der aufzunehmenden Meßeinrichtung (1) angepasst ist.

2. Vorrichtung nach Anspruch 1,
**dadurch gekennzeichnet,**
**dass** die Justiervorrichtung (31) des Justierelements (3) eine Gewindespindel (32) aufweist, deren freies und axial bewegbares Stirnende auf der Bezugsebene (4a) aufsteht.

3. Vorrichtung nach Anspruch 1 oder 2,
**dadurch gekennzeichnet,**
**dass** die Standvorrichtung (16) des Standelements (2) in der Form einer Dreipunktauflage ausgebildet ist.

4. Vorrichtung nach einem der Ansprüche 1 bis 3,
**dadurch gekennzeichnet,**
**dass** die Befestigungsvorrichtung (10) des Standelements (2) und/oder die Befestigungsvorrichtung (11) des Justierelements (3) als Federzunge ausgebildet ist, die einstückig mit dem Gehäuse (12; 28) ausgebildet ist.

5. Vorrichtung nach einem der Ansprüche 1 bis 3,
**dadurch gekennzeichnet,**
**dass** die Befestigungsvorrichtung (10') des Standelements (2) und/oder die Befestigungsvorrichtung (11) des Justierelements (3) als Schraubklemmung ausgebildet ist.

6. Vorrichtung nach einem der Ansprüche 1 bis 3,
**dadurch gekennzeichnet,**
**dass** die Befestigungsvorrichtung (10) des Standelements (2) und/oder die Befestigungsvorrichtung (11) des Justierelements (3) als Magnethalterung ausgebildet ist.

7. Vorrichtung nach einem der Ansprüche 1 bis 3,
**dadurch gekennzeichnet,**
**dass** die Befestigungsvorrichtung (10) des Standelements (2) und/oder die Befestigungsvorrichtung (11) des Justierelements (3) als Nut- und Federklemmung ausgebildet ist.

8. Vorrichtung nach einem der Ansprüche 1 bis 3,
**dadurch gekennzeichnet,**
**dass** die Befestigungsvorrichtung (10) des Standelements (2) und/oder die Befestigungsvorrichtung (11) des Justierelements (3) als Sicke, Kerbe, Nut oder dergleichen ausgebildet ist, in die ein Zapfen, eine Kugel, eine Spitze oder dergleichen einrastet.

## Claims

1. Apparatus for levelling measuring devices, in particular bubble levels or the like, in relation to a reference plane (4a), comprising an adjusting element (3) having a housing (28) which can be pushed on to a first end of the measuring device (1) and secured releasably by means of a securing device (11) to the measuring device (1), and an adjusting device (31) for heightwise setting of the one end of the measuring device from the reference plane (4a),
**characterised in that**
the apparatus is further provided with a stand element (2) having a housing (12) which can be pushed on to a second end of the measuring device (1) that is remote from the first end and secured releasably by means of a securing device (10, 10') to the measuring device (1), and a stand device (16) for securely standing the stand element (2) on the reference plane (4a); and
both the housing (28) of the adjusting element (3) and also the housing (12) of the stand element (2) are so designed that their internal cross-section is matched to the external cross-section of the measuring device (1) to be received.

2. Apparatus according to claim 1,
**characterised in that**
the adjusting device (31) of the adjusting element (3) has a screwthreaded spindle (32) whose free and axially movable end stands on the reference plane (4a).

3. Apparatus according to claim 1 or claim 2,
**characterised in that**
the stand device (16) of the stand element (2) is in the form of a three-point support.

4. Apparatus according to anyone of claims 1 to 3,
**characterised in that**
the securing device (10) of the stand element (2) and/or the securing device (11) of the adjusting element (3) is in the form of a spring tongue which is in one piece with the housing (12; 28).

5. Apparatus according to anyone of claims 1 to 3,
**characterised in that**
the securing device (10') of the stand element (2) and/or the securing device (11) of the adjusting element (3) is in the form of a screw clamping means.

6. Apparatus according to anyone of claims 1 to 3,
**characterised in that**
the securing device (10) of the stand element (2) and/or the securing device (11) of the adjusting element (3) is in the form of a magnetic holding means.

7. Apparatus according to anyone of claims 1 to 3,
**characterised in that**
the securing device (10) of the stand element (2) and/or the securing device (11) of the adjusting element (3) is in the form of a groove-and-tongue clamping means.

8. Apparatus according to anyone of claims 1 to 3,
**characterised in that**
the securing device (10) of the stand element (2) and/or the securing device (11) of the adjusting element (3) is in the form of a corrugation, notch, groove or the like into which a projection, ball, pointed portion or the like engages.

## Revendications

1. Dispositif pour niveler des appareils de mesure, notamment des niveaux à eau ou similaire par rapport à une surface de référence (4a) avec un élément de réglage (3) qui comporte un boîtier (28) qui peut être coulissé sur une première extrémité frontale de l'appareil de mesure (1) et qui peut être fixé de façon détachable sur l'appareil de mesure au moyen d'un dispositif de fixation (11) ; et lequel dispositif pour niveler des appareils de mesure est pourvu d'un dispositif de réglage (31) pour le réglage en hauteur de l'une des extrémités frontales du dispositif de mesure par rapport à la surface de référence (4a),
**caractérisé en ce**
**que** le dispositif est pourvu d'un élément de soutien (2) qui comporte un boîtier qui peut être coulissé sur une deuxième extrémité frontale tournée vers la première extrémité frontale du dispositif de mesure (1); lequel boîtier peut être fixé de façon détachable sur le dispositif de mesure (1) au moyen d'un dispositif de fixation (10, 10') et lequel dispositif comprend un dispositif de soutien (16) pour garantir un soutien sur de l'élément de soutien (2) sur la surface de référence (4a); et
**que** le boîtier (28) de l'élément de réglage (3) ainsi que le boîtier (12) de l'élément de soutien (2) sont construits de sorte que leur section transversale intérieure soit adaptée à la section transversale extérieure du dispositif de mesure (1) à considérer.

2. Dispositif selon la revendication 1,
**caractérisé en ce**
**que** le dispositif de réglage (31) de l'élément de réglage (3) comporte une broche filetée (32) dont l'extrémité frontale libre et se déplaçant de façon axiale s'appuie sur la surface de référence (4a).

3. Dispositif selon le revendication 1 ou 2,
**caractérisé en ce**
**que** le dispositif de soutien (16) de l'élément de soutien (2) est réalisé sous la forme d'un appui à trois points.

4. Dispositif selon une des revendications 1 à 3,
**caractérisé en ce**
**que** le dispositif de fixation (10) de l'élément de soutien (2) et/ou le dispositif de fixation (11) de l'élément de réglage (3) est formé en tant que languette élastique qui forme une pièce avec le boîtier (12 ; 28).

5. Dispositif selon une des revendications 1 à 3,
**caractérisé en ce**
**que** le dispositif de fixation (10') de l'élément de soutien (2) et/ou le dispositif de fixation (11) de l'élément de réglage (3) est formé en tant que serrage à vis.

6. Dispositif selon une des revendications 1 à 3,
**caractérisé en ce**
**que** le dispositif de fixation (10) de l'élément de soutien (2) et/ou le dispositif de fixation (11) de l'élément de réglage (3) est formé en tant que fixation à aimant.

7. Dispositif selon une des revendications 1 à 3,
**caractérisé en ce**
**que** le dispositif de fixation (10) de l'élément de soutien (2) et/ou le dispositif de fixation (11) de l'élément de réglage (3) est formé en tant que serrage à rainure et ressort.

8. Dispositif selon une des revendications 1 à 3,
**caractérisé en ce**
**que** le dispositif de fixation (10) de l'élément de soutien (2) et/ou le dispositif de fixation (11) de l'élément de réglage (3) est formé en tant que nervure, encoche, rainure ou similaire dans lequel est encliqueté un tenon, une bille une pointe ou similaire.
